# EUROPEAN PATENT APPLICATION

(11) **EP 4 699 482 A1**
(43) Date of publication of application: **25.02.2026**
(21) Application number: 23729840.1
(22) Date of filing: 20.04.2023
(51) Int. Cl.: A41D 13/02, G09B 9/00

(54) **CONTROLLABLE AGING SIMULATION SUIT**

(30) Priority: 19.04.2023 PT 2023118610
(71) Applicant: Escola Superior de Enfermagem de Coimbra, 3004-011 Coimbra (PT)
(72) Inventor: FERREIRA DE ALMEIDA, Maria de Lurdes, 3000-086 Coimbra (PT); NEVES COELHO, Adriana Raquel, 3040-381 Coimbra (PT); BAPTISTA SOUSA, Liliana, 3140-305 Pereira, MMV (PT); DOS SANTOS DINIS PARREIRA, Pedro Miguel, 3045-293 Coimbra (PT); ALVES BERNARDES, Rafael, 3000-187 Coimbra (PT); DIAS COUTINHO, Verónica Rita, 2500-071 Caldas da Rainha (PT); DE OLIVEIRA PAROLA, Vitor Sérgio, 3040-381 Coimbra (PT); FERNANDES RIBEIRO, Ana Sofia, 28342 Valdemoro, Madrid Madrid (ES); LOPES PARREIRA, Joana Íris, 3045-293 Coimbra (PT); DE ALMEIDA GOMES, Margareth Cristina, 22230-061 Flamengo - Rio de Janeiro (BR); DE ASSUNÇÃO GIL, Isabel Maria, 3020-272 Coimbra (PT); DOS SANTOS COSTA, Paulo Jorge, 3080-515 Figueira da Foz (PT); ROSSET, Idiane, 99460-100 Porto Alegre - Rio Grande do Sul (BR); GUITTON RENAUD BAPTISTA DE OLIVEIRA, Beatriz, 22.430-210 Leblon Rio de Janeiro RJ (BR); ALVES APÓSTOLO, João Luis, 3045-120 Coimbra (PT); ALVES CALDEIRA BERENGUER, Sílvia Maria, 1649-023 Lisboa (PT); FERREIRA PINTO, Paulo, 36 016 200 JUIZ DE FORA - MINAS GERAIS (BR); DOS SANTOS MENDES MÓNICO, Lisete, 2410-021 Pousos Leiria (PT); VIEIRA TOURINHO, Francis Solange, 88062-256 Florianópolis, Santa Catarina (PT); PEREIRA SANTOS, Viviane Euzébia, 59082-430 Natal - Rio Grande do Norte (BR); FERREIRA SALVADO, Marina Isabel, 3025-464 S. João do Campo (PT); FERREIRA DOS SANTOS, Eduardo José, 3040-387 Coimbra (PT)
(74) Representative: Moniz Pereira, Manuel
(86) International application number: PCT/IB2023/054049
(87) International publication number: WO 2024/218542

(57) **Abstract**

Aging simulation suit on an individual, comprising movement restriction means for surrounding each joint of the individual's upper limbs and/or lower limbs; and means for inflating or removing air coupled to the movement restriction means; wherein the means for inflating or removing air are accommodated in the simulation suit to exert a limitation of movements on the individual by means of a positive or negative pressure through said means for inflating or removing air from the movement restriction means positioned at the joints of the individual's upper limbs and/or lower limbs.

## Description

### TECHNICAL FIELD

The present disclosure concerns an aging simulation suit on an individual and its control method.

### BACKGROUND

With increased longevity, the complexity of healthcare practice increases, challenging nurses to promote healthy aging (bearing in mind that health is more than the absence of disease) for as long as possible, providing a range of appropriate responses to the elderly people's needs in the provision of care, considering the biological, psychological, spiritual, social, economic, cultural, and political dimensions involving aging (Directorate-General for Health [DGS], 2004; Eliopoulos, 2011). For the promotion of active aging, in a sense proposed by the World Health Organization, there must be initiatives that allow for the prevention of disabilities and the promotion of health so that the functionality of older people is preserved to the utmost extent (WHO, 2020).

At the same time, the elderly person belongs to a vulnerable group that requires a number of complex and long-term care, so healthcare professionals are challenged to ensure that care is informed by in-depth skills and knowledge that enable them to meet the unique needs of the elderly person, ensuring the use of evidence-based practices (Eliopoulos, 2011).

The specific use of the aging simulator consists in using a series of motor and/or sensory constrictors and aims to allow a personalized experience of limitations at the motor and/or sensory level that occur in the aging process, as well as the main difficulties in performing activities of daily living (Tremayne et al., 2011; Almeida, 2013).

A challenge in simulation is related to limitations of neurodegenerative origin, especially dementia, which result in cognitive and behavioural impairments that may be one of the reasons for the social stigma towards individuals suffering from dementia. In turn, this stigma may contribute to decreased life satisfaction, depressive symptoms and decreased psychological wellbeing, so it is of paramount importance that healthcare professionals, healthcare students, caregivers of people with dementia and the population in general develop a better understanding and awareness of what it is like to live with dementia.

Simulation in this context aims to create real and specific situations experienced by people with dementia in their daily lives and is increasingly being used in practice as an approach to enhance empathic understanding. In this way, simulated activities can trigger emotions, such as confusion and frustration caused by the inability to complete simple tasks, process sensory information, or perform certain tasks repeatedly (Slater, Hasson, Gillen, Gallen, & Parlour, 2019).

Healthcare professionals, caregivers, and citizens in general may have different perceptions and understandings of what it is like to live with dementia, so unarguably, the most powerful way to enhance that understanding is to provide these people with an experience, albeit a virtual one, of what it can be like to live with dementia (Adefila, Graham, Clouder, Bluteau, & Ball, 2016).

Some examples of these virtual experiences are: the Virtual Dementia Experience^{™} (VDE^{™}), (Alzheimer's Australia Vic, 2014), the myShoes project (Adefila, Graham, Clouder, Bluteau & Ball, 2016) and the Virtual Dementia Tour (VDT^{®}) (Beville, 2002).

DE202010008782U1 discloses an outer garment with fastening means, wherein the fastening means are arranged with respect to the outer garment placed by the wearer at fastening points in at least one position of body articulation and above and/or below the position of body articulation.

US10909884B2 discloses an aging simulation suit and a system having a joint that can provide a mechanical equivalent of a physical joint, e.g., a shoulder, elbow, hip, or knee, that can accommodate motion in rotational angle and/or tilt angle. In some embodiments, the system includes a mechanism, e.g., a servo, that can controllably tighten a socket around a ball joint, wherein the system can controllably adjust friction on the joint.

These facts are disclosed in order to illustrate the technical problem addressed by this disclosure.

### GENERAL DESCRIPTION

The present disclosure relates to a suit with watertight compartments surrounding each joint surface filled with a highly flexible material such as "styrofoam or any other flexible and very light material" that will allow it to inflate or deflate. These compartments are connected to a system of tubes that allow air to be inflated or, conversely, to be deflated, allowing, according to the positive or negative pressure, a limitation of movements to be exerted, thus recreating diversified scenarios with respect to the limitation of movements. Such scenarios can be recreated in complementarity with other alterations, if this is an interesting option to recreate a known clinical picture.

Such mechanism of limitation of movements will be possible through the connection of the tubes that connect directly with each space surrounding each joint, to a motor that will be accommodated in the posterior region of the suit. The motor that allows the removal or insufflation of air can run on batteries, battery, solar energy, or through a classic electrical system.

The joints that may be restricted are the scapulohumeral joint, limiting the movement of the arm; the elbow joint, limiting the movement of the forearm; the wrist joint, limiting the movement of the hand and fingers; the tibiotarsal joints, limiting the extension, dorsi-flexion, eversion and inversion of the foot; the knee joint, limiting its flexion and extension; or the hip joint, limiting the adduction and abduction, flexion and extension of the hip. The neck (Cervical Region) and the spine may also be highly limited in its movement, restricting respectively the head movements; and the flexion/extension/rotation movements of the spine in combination.

Profiles may be combined in joint limitation generating the presence of postural instability or limitation of the cervical region, which can force a curved, unstable, and unsafe posture.

For Parkinson's disease, tremors can be recreated at rest by means of vibrating equipment to be integrated into the suit at the level of the upper or lower limbs, bradykinesia and rigidity can be achieved through the strong joint limitation associated with the postural instability generated. Forcing the individual to bend over can be generated through the possibility of inflating the back, forcing the individual into a position with varying degrees of flexion.

In strokes some scenarios can be recreated, limiting the right or left hemi body alternatively, recreating paralysis and motor alterations. Sensory alterations may be recreated through TENS and electrical stimulation of strategic muscles, namely paraesthesia.

The following refers to the way to create spatial disorientation, paraesthesia, dysesthesia, and thermal changes.

In order to create the frequent symptoms such as "tingling" resulting from sensory alterations, "transcutaneous electrical nerve stimulation" (TENS) will be used, making use of electrical impulses to exert an action on the nervous system. Although its therapeutic use is often focused on the treatment of pain by recreating a tingling sensation that camouflages the pain, higher intensities may have a counterproductive effect by recreating sensations that may be unpleasant and even painful. The placement sites of the electrodes for stimulation can be any anatomical region to be selected in order to create desynchronization of the neural stimuli of the vestibular, visual, and proprioceptive systems, making it possible to influence autonomic cardiovascular responses and visuospatial and postural control abilities, and cognitive functions.

It is also intended to use electrical muscle stimulation (EMS), which creates involuntary contractions that can be unpleasant, recreating instability in those who walk or are in bipedal position. Such a situation aims to recreate "stings" felt by some individuals afflicted with situations resulting from various neurological alterations. The placement sites of the electrodes for stimulation may be any anatomical regions of choice.

Thermal changes and loss of touch in the extremities will be recreated through electrical heating or cooling system incorporated into the gloves.

The following refers to the way of limiting hearing acuity. Limiting the auditory acuity will be achieved through earplugs connected to software that allows to limit hearing, either by interrupting the sound, or by creating various sounds that may fluctuate in terms of volume and intensity, creating distortions, sounds that clearly and unambiguously disturb the understanding of the message becoming annoying. Tinnitus simulation will also be included in the suit functionality.

To simulate presbycusis, random and inconsistent sounds will be emitted to generate sound distortion and at the same time an inability to recognize words and sounds, which can be complemented with the emission of tinnitus.

In order to generate auditory hallucinations, individual sounds, words or phrases may be emitted. There may be emitted strange, incoherent words, or on the other hand, constantly repeated words.

The following refers to the way of limiting visual acuity. The visual limitations of the elderly person will be recreated using special simulation goggles. To recreate presbyopia, which refers to the normal and inevitable degeneration of the power of accommodation, dynamic contrasts will be created with different intensities of brightness, creating difficulties in vision due to difficulty in accommodation.

Recreating clouding/partial opacification of the lens, generating the appearance of different colours with image distortion achieved through contrasting changes in light intensity generates difficulty in vision due to changes in clarity typical of cataracts, severely limiting vision.

Recreating the funnel vision typical of glaucoma, in which the individual only sees through the central component of the visual field, severely limiting vision, creates discomfort and frustration, losing peripheral vision completely. This is achieved by opacification of the entire visual field except the central one.

To simulate macular degeneration, dynamic oscillations will be induced in the lens, resulting in images that alternate between clear and blurred vision.

To generate visual situations typical of diabetic retinopathy it is expected to create blurring in the lenses that will culminate in a fluctuating and hazy vision with the appearance of different colours generating difficulty in discriminating colours. Some small flashes of light will also be emitted creating spots in the visual field until almost total limitation of vision.

The alterations in visual acuity will be achieved through the dynamic blurring of the lenses with projection of images with different degrees of intensity and contrast decreasing or drastically increasing the clarity and the light/dark transition, severely limiting the illumination. The limiting creation in the different visual fields, creating alterations in the focus and visual field, recreating funnel-shaped and blurred images, typical of the individual with cataracts or retinitis pigmentosa, or the creation of homonymous or heteronymous hemianopsias, allowing the visualization of only half of the visual field of each eye, will characterize the different nosological entities that may affect citizens.

All the systems presented in the previous items can be actuated remotely through a software that will allow combining different scenarios, controlling all the joint compartments in the case of movement limitation, recreating different degrees and frequencies of pain intensity through TENS or EMS; different degrees and auditory scenarios, and with different possibilities of limitation of visual acuity.

**Table 1 - Models and comparison between them**

| **FEATURES: Simulation of sensory and motor changes** | **MODELS** | | | |
|---|---|---|---|---|
| | **GERT (50)** | **GENWORTH (51)** | **CIVIAN /KOKEN( 52)** | **Angelo - Our proposal** |
| Movement restrictor of the upper limbs (arm and hand) of the lower limbs (hip, knee, tibiotarsal) and spine | X | X | X | Incorporated in one piece and adaptable |
| Possibility to integrate weights to be incorporated into the suit (upper and lower limbs) that recreates limitation in mobility. | X | X | X | Inflation/deflati on system: simulating age-related changes (of the elderly) |
| Simulation of sensitivity through the use of gloves (touch). Plugs/ earplugs to simulate decreased auditory acuity and the generation of tinnitus. Goggles | X | X | X | Incorporation of thermal and texture sensors in the gloves and fine motor skills restrictors. |
| | | | | System recording) that produces unilateral or bilateral noises (bells, whistles, running water, |
| that should allow the visual field to be reduced (side vision and sense of depth), colors to change (color blindness) | | | | tinnitus, sirens, etc., with regulation of intensity) Goggles that simulate loss of side vision, central vision, hazy vision, and yellowing of the lens. |
| Tremor Perception | X | | | Use of T.E.N.S (Transcutaneous electrical nerve stimulation) and equipment that produces vibration |
| Simulation balance change (boots) | X | X | | Incorporate systems that vibrate and force a curved posture limiting posture |
| Inflamaging simulation | | | | Induction of small painful stimuli T.E.N.S |
| Ease of wearing | | | | Jacket and pants suit with no visible outer components |
| Discretion | | | | Suit with a design similar to common clothing |
| Possibility of adaptation to several publics | | | | Inflation system that allows to increase muscular-articular resistance according to the user's physical structure |

The disclosure has the following differentiating aspects:
- Dynamic suit instead of the classic static systems, restricting movements by means of an inflation/deflation system of the joint compartments that present light, styrofoam-like substances;
- Mechanical system placed on the back of the suit that allows each joint segment to be inflated/deflated in a compartmentalized way, recreating the changes as a function of age (of the elderly);
- Simulation of auditory, visual, tactile, and painful changes to varying degrees;
- Simulation of changes in mobility and joint range of motion, posture to varying degrees;
- Possibility of inducing painful stimuli, particularly in the joints: inflammaging;
- Possibility to induce stimuli (vibration system, TENS, and EMS) that simulate tremors, paresthesias and dysesthesias;
- Connection to a computer platform for parameterization and monitoring of various parameters: different degrees/levels of movement restriction, auditory, visual, tactile, and painful changes in varying degrees;
- Parameterization according to co-morbidity profiles to be defined/major conditions/customized conditions with differentiated levels of restriction (e.g. spinal flexion, knees, vision, hearing, sensation, etc.);
- Remote control of the restrictions to be implemented.

The disclosure may be applied to the following customers/consumers:
- Higher Schools of Nursing;
- Universities: Courses in Medicine, Sports Science, Physical Education, and Architecture;
- Higher Schools of Health: Occupational Therapy; Physical Therapy; Gerontology, others;
- Higher Schools of Education: Socio-educational Animation; Sports and Leisure;
- Social Gerontology;
- Care companies;
- Training companies;
- Companies that sell clinical material.
- Companies that value social responsibility (e.g. companies operating in the food trade)
- Hospitals;
- Social equipment (support for the elderly);
- Professional schools: hotel and tourism, socio-cultural animators, etc.
- Elementary and secondary schools;
- Public and private services (transportation, customer service in general, commerce and services);
- Managers of planning entities (public roads, accesses, traffic control, etc.);
- Public in general.

Disclosed is an aging simulation suit on an individual, comprising: movement restriction means for surrounding each joint of the individual's upper limbs and/or lower limbs; means for inflating or removing air coupled to the movement restriction means; wherein the means for inflating or removing air are accommodated in the simulation suit to exert a limitation of movements on the individual by means of a positive or negative pressure through said means for inflating or removing air from the movement restriction means positioned at the joints of the individual's upper limbs and/or lower limbs.

In an embodiment, the movement restriction means are a material that can be hardened by compaction.

In an embodiment, the hardenable material is styrofoam, polystyrene, expanded polystyrene, cloth, resin, foam, cork, or combinations thereof.

In an embodiment, the limiting mechanisms are tubes that connect directly to each space surrounding each joint.

In an embodiment, the simulation suit can further comprise at least one profile combined with the means for inflating or removing air, for joint limitation.

In an embodiment, the profile is combined with the means for inflating or removing air to generate postural instability or limitation of the individual's cervical region.

In an embodiment, the simulation suit can further comprise at least vibration means for generating joint vibration.

In an embodiment, vibration means are coupled to the individual's scapulohumeral joints to provide different degrees of flexion in the individual.

In an embodiment, the simulation suit can further comprise at least one means for electrical muscle stimulation in order to generate involuntary contractions in the individual.

In an embodiment, the simulation suit can comprise at least one heater and/or cooler for generating thermal changes in at least one extremity of the individual.

In an embodiment, the simulation suit can further comprise at least one earphone for diminishing the hearing quality of the individual.

In an embodiment, the simulation suit can comprise at least a pair of goggles for diminishing the visual quality of the individual, in particular dynamic contrasts with different intensities of brightness.

In an embodiment, the means for inflating or removing air are mechanical pumps. The means are obtained through a mechanical pump equipment that allows reversing the system by being able to inflate or deflate. Such a situation makes it possible to generate a vacuum system and the compressed air injection system in one equipment, and therefore the creation of vacuum and the injection of compressed air are integrated in a single equipment, with the presence of such devices in a hospital environment being traditional.

Further disclosed is a method for controlling an aging simulation suit on an individual, according to any of the preceding embodiments, comprising the steps of controlling a positive or negative pressure through said means for inflating or removing air from the movement restrictions means positioned at the joints of the individual's upper limbs and/or lower limbs.

In an embodiment, the controlling method further comprises the steps of activating the vibration means, and/or activating a heater and/or activating a cooler. In an embodiment, the method for promoting muscle contraction is accomplished by activating electrostimulation systems during gait, to create a situation of postural instability and during gait, static and dynamic respectively.

### References

Directorate-General for Health [DGS], Health Promotion for Older People. Ministry of Health; 2004.
Eliopoulos C. Enfermagem Gerontológica. 7a. São Paulo: Artmed Editora S.A.; 2011.
World Health Organization (WHO). Decade of Healthy Aging 2020-2030. WHO: New York, 2020. Retrieved from: https://cdn.who.int/media/docs/default-source/decade-of-health healthy-ageing/decade-proposal-final-apr2020rev-es.pdf?sfvrsn =b4b75ebc_25&download=true
Tremayne P, Burdett J, Utecht C. Simulation suit aids tailored care. Nurs Older People. 2011;23(7):19-22.
Slater, P., Hasson, F., Gillen, P., Gallen, A., & Parlour, R. (2019). Virtual simulation training: Imaged experience of dementia. International Journal of Older People Nursing, 14(3), 1-11. doi: 10.1111/opn. 12243
Adefila, A., Graham, S., Clouder, L., Bluteau, P., & Ball, S. (2016). myShoes - the future of experiential dementia training? The Journal of Mental Health Training, Education and Practice, 11(2), 91-101. doi: 10.1108/JMHTEP-10-2015-0048 Alzheimer's Australia Vic. (2014). Virtual Dementia Experience^{™}. https ://vic.fight dementia.org.au/vic/about-us/virtual-dementia-experience
Beville, P. K. (2002). Virtual Dementia Tour® helps senditiz health care providers. American Journal of Alzheimer's Disease & Other Dementiasr, 17(3), 183-190. doi:10.1177/ 153331750201700301
Almeida ML. Simulação da experiência sensorial e motora de ser idoso. Atas II Congresso Ibero-Americano e III Congresso Luso - Brasileiro de Psicologia da Saúde. Universidade do Algarve. ISBN: 978-989-20-3934-3; 2013.

### BRIEF DESCRIPTION OF THE DRAWINGS

The following figures provide preferred embodiments to illustrate the disclosure and should not be viewed as limiting the scope of the invention.
Figure 1 represents an embodiment with (a) front view of the suit; (b) rear view of the suit and (c) right side view.

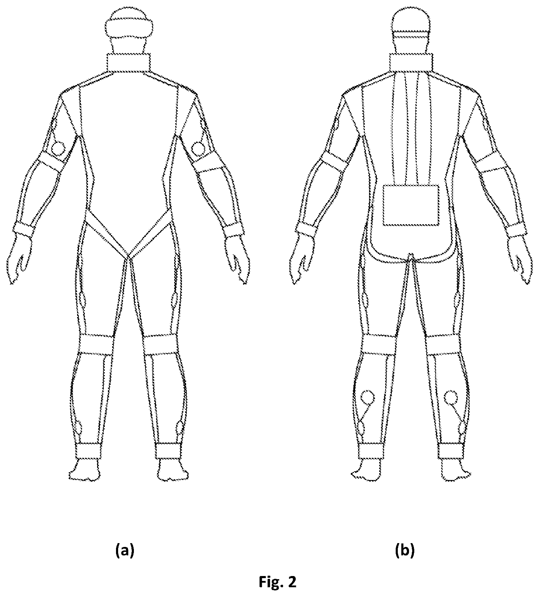

Figure 2 represents an embodiment with (a) front view of the suit and (b) rear view of the suit.

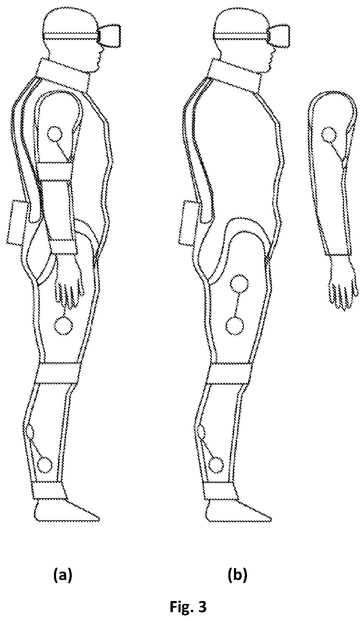

**Figure 3** represents an embodiment with (a) right side view with arm and (b) right side view without arm.

### DETAILED DESCRIPTION

The present disclosure relates to an aging simulation suit on an individual, comprising: movement restriction means for surrounding each joint of the individual's upper limbs and/or lower limbs; means for inflating or removing air coupled to the movement restriction means; wherein the means for inflating or removing air are accommodated in the simulation suit to exert a limitation of movements on the individual by means of a positive or negative pressure through said means for inflating or removing air from the movement restriction means positioned at the joints of the individual's upper limbs and/or lower limbs.

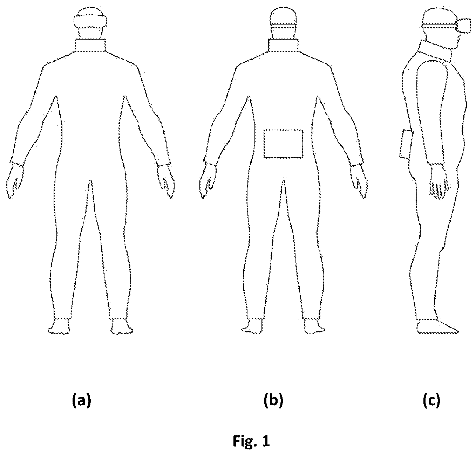

Figure 1 shows a schematic representation of an embodiment with (a) front view of the suit; (b) rear view of the suit and (c) right side view.

The term "comprising" whenever used herein is intended to indicate the presence of features, integers, steps, components mentioned, but not to preclude the presence or addition of one or more other features, integers, steps, components, or groups thereof.

It will be appreciated by a person with ordinary skill in the art that, unless otherwise indicated herein, the particular sequence of steps described is illustrative only and may be varied without departing from the disclosure. Thus, unless otherwise indicated, the steps described are thus disordered, meaning that, when possible, the steps may be performed in any convenient or desirable order.

The disclosure should not be seen in any way restricted to the embodiments described, and a person with ordinary skill in the art may foresee many possibilities of modifications thereof. The above-described embodiments are combinable. The following claims further define particular embodiments of the disclosure.

## Claims

1. Aging simulation suit on an individual, comprising:
- movement restriction means for surrounding each joint of the individual's upper limbs and/or lower limbs;
- means for inflating or removing air coupled to the movement restriction means;
- wherein the means for inflating or removing air are accommodated in the simulation suit to exert a limitation of movements on the individual by means of a positive or negative pressure through said means for inflating or removing air from the movement restriction means positioned at the joints of the individual's upper limbs and/or lower limbs.

2. Suit according to the preceding claim wherein the movement restriction means are a material that can be hardened by compaction.

3. Suit according to the preceding claim wherein the hardenable material is styrofoam, polystyrene, expanded polystyrene, cloth, resin, foam, cork, a polymer, or combinations thereof.

4. Suit according to any one of the preceding claims wherein the limiting mechanisms are tubes that connect directly to each space surrounding each joint.

5. Suit according to any one of the preceding claims further comprising at least one profile combined with the means for inflating or removing air for joint limitation.

6. Suit according to the preceding claim wherein the profile is combined with the means for inflating or removing air, in order to generate postural instability or limitation of the individual's cervical region.

7. Suit according to any one of the preceding claims further comprising at least vibration means for generating joint vibration.

8. Suit according to the preceding claim wherein the vibration means are coupled to the individual's scapulohumeral joints to provide different degrees of flexion in the individual.

9. Suit according to any one of the preceding claims further comprising at least one means for electrical muscle stimulation in order to generate involuntary contractions in the individual.

10. Suit according to any one of the preceding claims further comprising a heater and/or cooler for generating thermal changes in at least one extremity of the individual.

11. Suit according to any one of the preceding claims further comprising at least one earphone for diminishing the hearing quality of the individual.

12. Suit according to any one of the preceding claims further comprising at least one pair of goggles for diminishing the visual quality of the individual, in particular dynamic contrasts with different intensities of brightness.

13. Suit according to any one of the preceding claims wherein the means for inflating or removing air are pumps.

14. Method for controlling an aging simulation suit on an individual according to any one of claims 1-13, comprising the steps of: controlling a positive or negative pressure through said means for inflating or removing air from the movement restriction means positioned at the joints of the individual's upper limbs and/or lower limbs.

15. Method for controlling an aging simulation suit on an individual according to the preceding claim further comprising the steps of: activating the vibration means, and/or activating a heater and/or activating a cooler.
